# EUROPÄISCHE PATENTSCHRIFT

(11) **EP 1 349 448 B1**
(45) Veröffentlichungstag und Bekanntmachung des Hinweises auf die Patenterteilung: **04.08.2004**
(21) Anmeldenummer: 02715407.9
(22) Anmeldetag: 10.01.2002
(51) Int. Cl.: A01J 5/08

(54) **MELKBECHER**
MILKING CUP
GOBELET TRAYEUR

(30) Priorität: 10.01.2001 DE 10100839
(43) Veröffentlichungstag der Anmeldung: 08.10.2003
(73) Patentinhaber: WestfaliaSurge GmbH, 59302 Oelde (DE)
(72) Erfinder: SCHULZE-WARTENHORST, Bernhard, 48231 Warendorf (DE)
(74) Vertreter: Grünecker, Kinkeldey, Stockmair & Schwanhäusser Anwaltssozietät
(86) Internationale Anmeldenummer: PCT/EP2002/000161
(87) Internationale Veröffentlichungsnummer: WO 2002/054858

(56) Entgegenhaltungen:
- EP-A- 0 124 118
- DE-C- 173 562
- GB-A- 912 567
- US-A- 3 659 558
- US-A- 4 846 108

## Beschreibung

Die vorliegende Erfindung betrifft einen Melkbecher mit einem Gehäuse und einem in dem Gehäuse aufgenommenen Zitzengummi, welches einen Zitzenraum von einem Pulsraum trennt und welches einen Kopfbereich, einen Schaftbereich und einen Endbereich aufweist, welcher mit einem Milchkanalanschlussstück kommuniziert.

Melkbecher der eingangs genannten Art werden zum Melken von Schafen, Ziegen aber insbesondere zum Melken von Kühen verwendet und sind beispielsweise aus der DE-PS 173562 bekannt.

Der gattungsbildende Melkbecher weist einen Kopfbereich auf, welcher sich stimseitig über das Gehäuse erstreckt und dieses abdichtet und darüber hinaus das Gehäuse gegenüber dem Euter abpuffert. Mit dem Kopfbereich wird der Zitzenbecher regelmäßig an dem Gehäuse befestigt. Darüber hinaus wird durch den Kopfbereich die Einlassöffnung für eine in den zentralen Zitzenraum einzubringende Zitze gebildet.

An diesen Kopfbereich, dessen Längserstreckung sich auf das vordere Ende des Gehäuses beschränkt, schließt sich ein Schaftbereich an. Dieser Schaftbereich ist schlauchförmig ausgebildet und geht in einen Endbereich über, welcher mit einem Milchanschlussstück kommuniziert. Das Milchanschlussstück kann integral als Bestandteil des Zitzengummis ausgebildet sein oder aber mit diesem befestigt sein.

Der vorliegenden Erfindung liegt das technische Problem zugrunde, einen Melkbecher der eingangs genannten Art mit verbesserten Haftungseigenschaften gegenüber einer in dem Zitzenraum aufgenommenen Zitze bei größtmöglicher Schonung des unteren Endes der Zitze bereitzustellen.

Zur Lösung des obigen Problems wird gemäß einem ersten Aspekt der vorliegenden Erfindung vorgeschlagen, zumindest in dem unteren Längenabschnitt des Schaftbereiches eine längliche Querschnittsform vorzusehen, wobei an den Breitseiten der länglichen Querschnittsform jeweils ein Bereich vorgesehen ist, der rechtwinklig zur Breitenrichtung eine höhere Wandstärke als die sich gegenüberliegenden Längsseiten des Querschnitts hat. Eine derartige Ausgestaltung im Sinne der Erfindung wird bereits dann verwirklicht, wenn die die Längsseiten verbindenden Breitseiten die gleiche Wandstärke aufweisen, sich jedoch abschnittsweise schräg auf die Mitte des Schaftbereiches zu und/oder schräg von dem Schaftbereich weg erstrecken. Bei einem Schnitt durch eine derartig ausgestaltete Breitseite rechtwinklig zur Breitenrichtung ergibt sich bereits eine gegenüber der Längsseite höhere Wandstärke. Darüber hinaus können Verdickungen oder Ähnliches an der Breitseite vorgesehen sein. Die Verdickung der Breitseite in einer Richtung rechtwinklig zur Breitenrichtung verbessert ein vollständiges Anliegen sämtlicher Innenflächen des Schaftbereiches in einem kollabierten Zustand des Zitzengummis. Mit anderen Worten ist eine geringere Druckdifferenz zwischen dem Pulsraum und dem Zitzenraum erforderlich, um eine in dem Zitzenraum aufgenommene Zitze von dem Milchkanalanschlußstück und dem sich daran anschließenden, regelmäßig mit Unterdruck beaufschlagten Leitungen vollständig zu trennen. Diese Trennung im kollabierten Zustand ist bereits im Stand der Technik, z.B. der EP-A-0 124 118 als förderlich beschrieben worden. Mit der vorliegenden Erfindung ist es möglich, diesen Zustand bei geringerer Druckdifferenz zwischen Zitzenraum und Pulsraum zu erreichen, wodurch die in dem Zitzenraum aufgenommene Zitze noch besser geschont wird.

Zur Lösung des obigen Problems wird gemäß einem weiteren Aspekt der vorliegenden Erfindung vorgeschlagen, an dem Schaftbereich denjenigen Bereich, der die in dem Melkbecher aufgenommene Zitze mit ihrem vorderen Ende umgibt, mit geringerer Wandstärke auszubilden. Auch diese Maßnahme führt zur Entlastung der Zitze, vornehmlich der Kuppe derselben. Der während des Melkens an dem Milchanschlußstück anliegende Unterdruck verringert sich beim Melken, sobald aus der Zitze Milch austritt und diese abfließt. Aufgrund der verringerten Wandstärke hat der die Zitzenkuppe umgebende Bereich des Schaftbereiches eine geringere Formsteifigkeit, was dazu führt, dass dieser Längenbereich schneller als die übrigen Bereiche auf die veränderten Druckverhältnisse reagiert und radial nach außen aufgeht. Hierdurch entsteht ein leichter Aufreißeffekt, der dafür sorgt, dass die Zitzenkuppe in der Saugphase von dem durch die Wandung des Zitzengummis aufgebrachten Druck entlastest wird.

Gemäß einer bevorzugten Weiterbildung der vorliegenden Erfindung wird vorgeschlagen, einen Schaftbereich vorzusehen, der zumindest in seinem sich an den Kopfbereich anschließenden oberen Längenabschnitt eine konstante längliche Querschnittsform aufweist. Der derart weitergebildete Melkbecher ermöglicht aufgrund der länglichen Querschnittsform eine bestmögliche Anpassung an unterschiedliche Zitzendurchmesser und -längen der in dem oberen Längenabschnitt aufgenommenen Zitze. Als längliche Querschnittsformen gelten insbesondere solche, bei denen das Längenmaß um 40 % größer als das Breitenmaß ist. Es hat sich herausgestellt, dass mit einer derartigen länglichen Querschnittsform eine bestmögliche Haftung gegenüber der Zitze erzielt werden kann. Es hat sich insbesondere herausgestellt, dass in der Vergangenheit bei herkömmlichen Melkbechem beobachtete nachteilige Erscheinungen mit der Erfindung weitgehend vermieden werden können. Eine dieser nachteiligen Erscheinungen ist darin zu sehen, dass beim Melken die Haftreibung zwischen Zitze und Zitzengummischaft verloren geht, so dass sich der Melkbecher gegenüber der Zitze verlagert. Bei herkömmlichen Schaftgeometrien mit rundem Querschnitt klettert der Zitzenbecher bei Verlust der Haftreibung in Richtung Euterbasis und drückt dabei im Kopfbereich den Übergang zwischen der Zitze und der Euterbasis ein, was zum Erliegen des Milchflusses aus der Zitze führen kann. Im Gegensatz dazu kann sich die längliche Querschnittsform des Zitzengummis an verschiedene Geometrien insbesondere durch Ausbauchen der Längsseite des Zitzengummis anpassen. Diese Anpassung gilt insbesondere für heute häufiger anzutreffende Zitzenformen, bei denen die Zitze im Wesentlichen zylindrisch und nicht wie früher kegelstumpfförmig ausgebildet ist. Die heute häufiger anzutreffende Zitzenform hat darüber hinaus einen geringeren Durchmesser als früher und weist einen verhältnismäßig kantigen Übergang zu der Euterbasis auf.

Während bei dem eingangs erwähnten Stand der Technik DE-PS-173562 der Kopfbereich des Zitzengummis zur Ausbildung eines die Zitze klemmenden Kniehebels länglich ausgebildet ist, der Schaftbereich aber von dieser länglichen Querschnittsform in eine kreisrunde Querschnittsform übergeht, wird mit der vorliegenden Erfindung vorgeschlagen, den oberen Längenabschnitt des Schaftbereiches zur Verbesserung der Haftreibung zwischen dem Zitzengummi und der Zitze ausschließlich mit einem konstanten länglichen Querschnitt vorzusehen.

Vorzugsweise erstreckt sich bei dem erfindungsgemäßen Melkbecher der Bereich verringerter Wandstärke nach dem zweiten Aspekt der vorliegenden Erfindung bis in den unteren Längenabschnitt des Schaftbereiches. Insbesondere bei einer Kombination des ersten und des zweiten Aspektes der vorliegenden Erfindung wird so zum Einen eine schonende Behandlung der Zitzenkuppe beim Melken und zum Anderen ein Verschluss des Zitzengummis gegenüber nachgeordneten Milchleitungen bei geringerer Druckdifferenz erzielt, wodurch Bedingungen geschaffen werden, bei denen ein schonenderes Melken des Tieres möglich ist.

Vorzugsweise weist der untere längliche Längenabschnitt des Schaftbereiches an seinen beiden sich gegenüberliegenden Breitseiten eine Materialanhäufung auf. Die Materialanhäufung im Sinne der vorliegenden Erfindung kann durch eine Vergrößerung der. Wandstärke an der Breitseite des Zitzengummis gebildet sein. Alternativ können an der Breitseite in Breitenrichtung mehrere Lagen der Zitzengummiwandung hintereinander angeordnet sein. Geeignet sind sämtliche Ausgestaltungen, die ein enges Anliegen der Endstücke der sich gegenüberliegenden Längsseiten des Querschnittprofils begünstigen. So kann beispielsweise die Mitte der sich gegenüberstehenden Breitseiten nach innen eingeschnürt sein. Alternativ kann die Breitseite auch nach Art eines Faltenbalges ausgebildet sein.

Gemäß einer weiteren bevorzugten Ausgestaltung des erfindungsgemäßen Melkbechers ist das Zitzengummi derart ausgebildet, dass Druckänderungen zwischen dem Zitzenraum und dem Pulsraum im wesentlichen ausschließlich durch Ausbreitung des Zitzengummis in Breitenrichtung des länglichen Querschnittsprofils ausgeglichen werden. Bei einer derartigen Ausgestaltung wird zum einen verhindert, dass selbst bei einer Verminderung des Innendrucks in dem geschlossenen Pulsraum das Zitzengummi die Innenwandung des Gehäuses berührt. Das wesentlich längere Längenmass der länglichen Querschnittsform bleibt auch bei derartigen Druckdifferenzen zwischen dem Pulsraum und dem Zitzenraum im Wesentlichen gleich lang. Aber auch bei einer das Zitzengummi kollabierenden Druckdifferenz erfolgt sämtliche Formänderung im Wesentlichen durch die Bewegung in Breitenrichtung. Insbesondere ein mehrlagiger Aufbau des Zitzengummis an der Breitseite verhindert wirkungsvoll eine unerwünschte Vergrößerung des Zitzengummis in Längenrichtung.

Die vorzugsweise vorzusehende Verringerung der Formsteifigkeit in dem Teilstück des Schaftbereiches wird vorzugsweise und auf einfache Weise durch Verringerung der Wandstärke des Teilstückes erzielt.

Es hat sich als zweckmäßig für die derzeit bestehenden Zitzenformen von Milchkühen erwiesen, das Längenmass des länglichen Querschnitts des Zitzenschaftbereiches zwischen 24 und 35 Millimeter, vorzugsweise zwischen 28 und 32 Millimeter einzustellen. Für das Breitenmaß gilt unter den obengenannten Bedingungen ein bevorzugter Größenbereich von zwischen 14 und 20 Millimetern, besonders bevorzugt von zwischen 16 und 17 Millimetern. Insbesondere mit dem vorerwähnten Längenmaß lassen sich die verschiedenen Formen des Schaftbereiches des erfindungsgemäßen Melkbechers auf Gehäuse herkömmlicher Melkbecher anpassen. Ein Nachrüsten ist ohne weiteres möglich.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Fig. 1:: eine Längsschnittansicht eines Ausführungsbeispiels eines erfindungsgemäßen Melkbechers;
- Fig. 2:: eine Schnittansicht entlang der Linie II-II gem. der Fig. 1 für ein erstes Ausführungsbeispiel;
- Fig. 3:: eine Schnittansicht entlang der Linie III-III gem. der Fig. 1 für das erste Ausführungsbeispiel
- Fig. 4:: eine Schnittansicht entlang der Linie III-III gem. der Fig. 1 für ein alternatives Ausführungsbeispiel und
- Fig. 5:: eine Schnittansicht entlang der Linie II-II gem. der Fig. 1 für ein weiteres Ausführungsbeispiel;

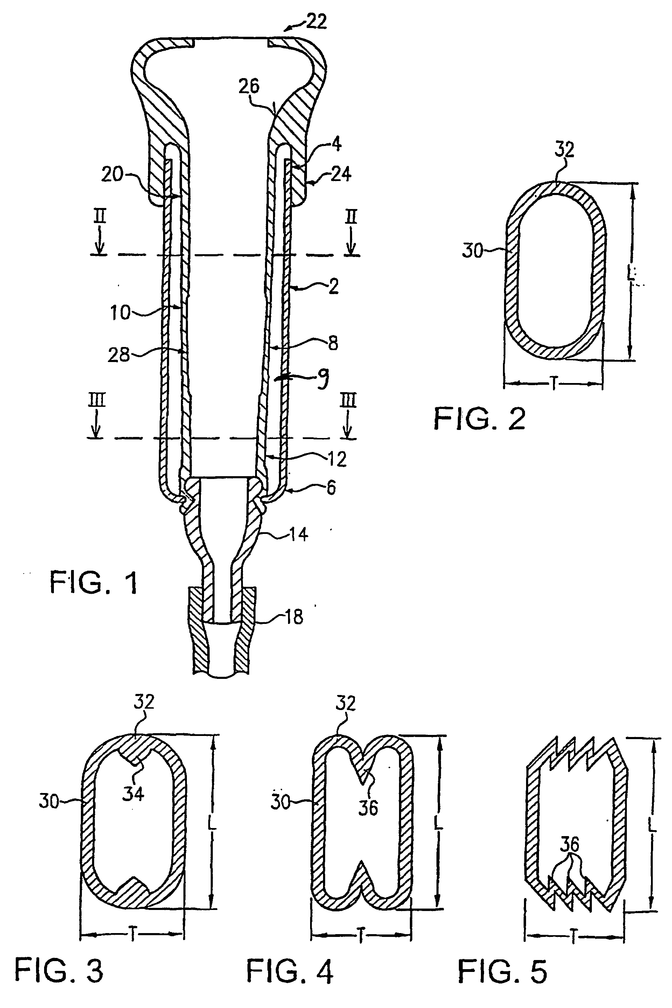

In Fig. 1 ist ein Ausführungsbeispiel eines Melkbechers in einer Längsschnittansicht gezeigt. Der Melkbecher weist ein Gehäuse 2 auf, welches im vorliegenden Fall zylinderförmig mit einem oberen offenen Ende 4 und einem nach unten umbogenen unteren Ende 6 ausgebildet ist. Der Melkbecher weist weiterhin ein Zitzengummi 8 auf, welches mit seinem Schaftbereich 10 von dem Gehäuse 2 umgeben ist. Ein Endbereich 12 des Zitzengummis ist zwischen dem unteren Ende 6 des Gehäuses 2 und einem Verbindungsstück 14 geklemmt. Hierzu weist das Verbindungsstück 14 eine keilförmige Ausnehmung auf, in welche das umbogene untere Ende 6 des Gehäuses 2 unter Zwischenlage des Endbereiches 12 hineinragt. Das Verbindungsstück 14 dient der Abfuhr der ermolkenen Milch aus einem umfänglich von dem Zitzengummi umgebenen Zitzenraum 16 in eine nur ansatzweise dargestellte Milchleitung 18.

Das Zitzengummi 8 verbreitert sich in seinem Kopfbereich 20 glockenförmig und geht einteilig in einen sich etwa rechtwinklig zu der Längsachse des Gehäuses 2 erstreckenden Dichtring 22 über. Dieser Dichtring 22 umschließt eine Einlassöffnung für die Zitze mit kreisrundem Querschnitt.

Der untere Teil des Kopfbereiches 20 ist doppelwandig mit einer sich zu dem unteren Ende 6 des Gehäuses 2 öffnenden Ringnut ausgebildet. Eine äußere Wand 24 der Ringnut ist hier mit dem oberen Ende 4 des Gehäuses 2 vorzugsweise stoffschlüssig verbunden. Eine innere Wandung 26 bildet eine konvexe Oberfläche, welche den größten Durchmesser des Kopfbereiches 20 mit dem im Wesentlichen zylinderförmig ausgebildeten Schaftbereich 10 verbindet. Der Kopfbereich 20 geht ohne Absatz kontinuierlich in den Schaftbereich 10 über.

Der Schaftbereich 10 des Zitzengummis 8 erstreckt sich somit im Wesentlichen von dem oberen Ende 4 des Gehäuses 2 bis zu seinem Endbereich. In diesem Schaftbereich 10 weist das Zitzengummi 8 eine längliche Querschnittsform auf. Die längliche Querschnittsform erstreckt sich vorzugsweise von derjenigen Stelle, wo die Wandung 26 nach konvex gekrümmtem Verlauf im Wesentlichen koaxial zu der Längserstreckung des Gehäuses 2 verläuft, bis kurz vor das Verbindungsstück 14. Das Verbindungsstück 14 kann ebenfalls zumindest an seinem oberen Ende, d.h. dort wo das Verbindungsstück 14 mit dem Zitzengummi 8 verbunden ist, einen länglichen Querschnitt aufweisen und mit rundem Querschnitt unten in die Milchleitung 18 übergehen. Zur Vereinfachung der Herstellung ist es jedoch zu bevorzugen, das Verbindungsstück 14 insgesamt rotationssymmetrisch auszubilden. Der Übergang von einem länglichen zu einem kreisrunden Querschnitt findet dann in dem Endbereich 12 des Zitzengummis 8 statt.

In gleicher Weise wird der Querschnitt des Zitzenraumes 16 ausgehend von der kreisrunden, durch den Dichtring 22 umgebenen Einlassöffnung ausschließlich in dem Kopfbereich in eine längliche Querschnittsform überführt.

Wie.Fig. 1 weiterhin zu entnehmen ist, weist ein Teilstück des Schaftbereiches 10 eine gegenüber dem übrigen Schaftbereich 10 verringerte Wandstärke auf. Dieser Bereich verringerter Wandstärke ist mit dem Bezugszeichen 28 versehen und hat bei dem gezeigten Ausführungsbeispiel etwa eine Längserstreckung von einem Viertel der Länge des gesamten Schaftbereiches 10. Das Teilstück mit verringerter Wandstärke 28 ist derart positioniert, dass es die Spitze einer in dem Melkbecher aufgenommenen Zitze des zu melkenden Tieres umgibt. Der oberhalb des Bereiches verringerter Wandstärke liegende Längenabschnitt des Schaftes weist eine glatte Innenfläche auf.

Die längliche Querschnittsform kann unterschiedliche Ausgestaltungen aufweisen. Länglich im Sinne der vorliegenden Erfindung bedeutet, dass das Längenmaß des Querschnittes wenigstens 40 % größer als das Breitenmaß ist. Die Ausrichtung der länglichen Querschnittsform in dem rotationssymmetrisch ausgebildeten Gehäuse 2 ist beliebig. Fig. 1 zeigt eine Schnittansicht des Zitzengummis 8 bei einer Schnittlinie in Übereinstimmung mit der Mittellängsachse des Profils gemäß Fig. 2. Das Profil in Fig. 2 weist sich parallel erstreckende Längsseiten 30 sowie diese verbindende, halbkreisförmig ausgebildete Breitseiten 32 auf. Die Innenfläche des Profils ist eben.
Die Fig. 3 - 5 zeigen bevorzugte Querschnittsformen, wie sie vorzugsweise ausschließlich in einem Bereich unterhalb der Kuppe einer in dem Melkbecher aufgenommenen Zitze vorgesehen sind. Die in den Fig. 3 - 5 gezeigten Ausführungsbeispiele weisen jeweils eine längliche Querschnittsform mit Materialanhäufungen an beiden Breitseiten 32 auf. Bei dem in Fig. 3 gezeigten Ausführungsbeispiel ist die Wandstärke des Zitzengummis 8 an der Breitseite 32 durch jeweils eine Verdickung 34 erhöht. Die Verdickung läuft innenseitig spitz aus. Bei dem Ausführungsbeispiel in Fig. 4 ist die Materialanhäufung durch eine doppellagige Ausgestaltung des Zitzengummimaterials zunächst bei konstanter Wandstärke gebildet. Hier ist der Querschnitt an der Breitseite 32 einmal nach innen eingeschlagen, so dass sich eine zum Innem zulaufende Spitze 36 ergibt. Bei dem in Fig. 5 gezeigten alternativen Ausführungsbeispiel ist das Zitzengummi 8 an der Breitseite 32 nach Art eines Faltenbalges verdickt ausgebildet und weist mehrere Spitzen 36 auf.

Die in den Fig. 3 - 5 gezeigten Querschnittsformen des Schaftbereiches sind im Anschluss an den Bereich verringerter Formsteifigkeit, d.h. dem Bereich verringerter Wandstärke ausgebildet, also zwischen dem Bereich 28 und dem Verbindungsstück 14. Der oberhalb, d.h. zum Kopfbereich 20 benachbarte angeordnete Längenabschnitt des Schaftbereiches 10 hat vorzugsweise eine glatte Fläche, wie sie beispielsweise in Fig. 2 dargestellt ist. Neben den in den Fig. 2 - 5 gezeigten Ausführungsbeispielen von Querschnittsformen können als längliche Querschnittsformen auch elliptische oder ovale Querschnittsformen vorgesehen sein, und zwar auch in Kombination miteinander wahlweise im oberen Längenabschnitt, im unteren Längenabschnitt oder im mittleren Bereich 28.

Bei einer in dem Melkbecher aufgenommen Zitze eines zu melkenden Tieres ragt diese mit ihrem Ende in den Bereich verringerter Wandstärke 28 hinein. Beim Melken wird pulsierend in dem Pulsraum 9 ein Unterdruck eingestellt, der anschließend wieder auf Atmosphärendruck entspannt wird. Ober die Milchleitung 18 wirkt darüber hinaus ein Unterdruck in dem unteren Teil des Zitzenraumes 8 auf das unten offene Ende der Zitze. Der Druck in dem Pulsraum 9 sowie der durch die Milchleitung 18 in dem unteren Bereich des Zitzenraumes 16 erzeugte Innendruck können unabhängig voneinander eingestellt werden. Bei maximalem Unterdruck wird üblicherweise in dem Pulsraum 9 ein höherer Druck eingestellt als in dem unteren Bereich des Zitzenraumes 16. Bei einer derartigen Verfahrensführung legen sich die inneren Wandungen desjenigen Bereiches des Zitzengummis, welcher an seiner Breitseite die Materialabhäufung aufweist, derart aneinander, dass zumindest ein Teilstück des Zitzenraumes 16 luftdicht verschlossen ist. In diesem Zustand liegen bei dem Ausführungsbeispiel gemäß Fig. 3 die inneren Wandungen der Breitseite 32 an der Verdickung 34 an, wohingegen sich die geraden Längsseitenabschnitte dichtend aneinander legen. Eine ähnliche Abdichtung ergibt sich bei dem Ausführungsbeispiel der Fig. 4. Dort werden die beiden, jeweils an der Breitseite 32 ausgebildeten halbkreisförmigen Rundungen verformt, so dass sich die in diesen Rundungen gegenüberliegenden Innenwandbereiche aneinander legen. Auch die in der Ausgangsstellung parallel zueinander verlaufenden Längsseiten 30 legen sich aneinander und schmiegen sich dichtend an die Flanken der Spitze 36 an. Bei dem in Fig. 5 gezeigten Ausführungsbeispiel legen sich bei einem von außen wirkenden Relativdruck die an der Breitseite 32 vorgesehenen Lagen des Faltenbalges sowie die sich gegenüberliegenden Längsseiten 30 unter Verschluss des in dem konturierten Schaftbereich üblicherweise vorgesehenen Durchganges aneinander.

Die Kuppe der in dem Melkbecher aufgenommenen Zitze wird von dem in seiner Wandstärke verringerten Bereich 28 belegt. Oberhalb der Kuppe wird die Zitze von einem Längenbereich des Schaftbereiches umgeben, der innenseitig einen kontinuierlichen, glatten Verlauf aufweist, wie er beispielsweise in Fig. 2 dargestellt ist. Die Querschnittsform ist hier derart, dass das Längenmaß L wenigstens 40 % größer als das Breitenmaß T ist. Dies führt dazu, dass bei variierenden Zitzendurchmessem die Zitze jeweils haftend an dem Schaft anliegt. Auf eine Materialverdickung bzw. auf einen konturierten Verlauf der Innenfläche des Schaftes, wie er in den Fig. 3 - 5 dargestellt ist, sollte in dem oberen Längenabschnitt der an der Längsseite der Zitze anliegt, verzichtet werden. Es muss befürchtet werden, dass eine walgende Bewegung des Zitzengummis sich negativ auf die Zitze auswirkt.

Während bei einem relativen Überdruck zwischen dem Pulsraum 9 und dem Zitzenraum 16 der untere Längenabschnitt des Schaftbereiches 10 zu der Milchleitung 18 hin verschlossen ist, wirkt eine Rückführung des Druckniveaus in dem Pulsraum 9 wie folgt: Der gegen die Kuppe der Zitze anliegende, in seiner Wandstärke verringerte Längenbereich 28 wird zunächst aufgrund seiner gegenüber dem oberhalb und unterhalb liegenden Längenabschnitten verringerten Formsteifigkeit von der Kuppe abgelöst. Hierdurch wird eine Art Aufreißeffekt erzielt, der dafür sorgt, dass zu Beginn der Saugphase von ermolkener Milch in die Milchleitung in jedem Fall die Zitzenkuppe entspannt ist. Dort nämlich befindet sich der den Strich der Zitze verschließende Schließmuskel. Danach löst sich der Verschluss des darunter liegenden Längenabschnitts des Schaftsbereiches 10, so dass der über die Milchleitung 18 eingestellte Unterdruck wirken und die Milch abgezogen werden kann. Bei einer weiteren Erhöhung des absoluten Druckes in dem Pulsraum 9 dehnt sich der Schaftbereich 12 des Zitzengummis 8 insgesamt aus, wobei aufgrund der Versteifung an der Breitseite (vgl. Fig. 3) bzw. aufgrund der gefalteten Ausbildung an der Breitseite gemäß den Ausführungsbeispielen der Fig. 4 und 5, das Zitzengummi lediglich in Breitenrichtung wächst. Die ohnehin ursprünglich vergrößerte Längserstreckung L des Schaftsbereiches des Zitzengummis verändert sich jedoch im Wesentlichen nicht. Dadurch kann ausgeschlossen werden, dass das Zitzengummi im Schaftbereich gegen die Innenseite der Gehäusewandung anliegt.

Ein Zitzengummi im Sinne der vorliegenden Erfindung muss nicht zwingend aus Gummi hergestellt sein. Vielmehr kann jedes beliebige, dauerelastische Material verwendet werden. Bei dem gezeigten Ausführungsbeispiel ist das Zitzengummi einteilig hergestellt, d.h. auch der Dichtring 22 ist Bestandteil des einteilig hergestellten Zitzengummis.

### Bezugszeichenliste

- 2: Gehäuse
- 4: oberes Ende
- 6: unteres Ende
- 8: Zitzengummi
- 2: Gehäuse
- 4: oberes Ende
- 6: unteres Ende
- 8: Zitzengummi
- 9: Zitzengummi
- 10: Schaftbereich
- 12: Endbereich
- 14: Verbindungsstück
- 16: Zitzenraum
- 18: Milchleitung
- 20: Kopfbereich
- 22: Dichtring
- 24: Wandung
- 26: Wandung
- 28: Bereich verringerter Wandstärke
- 30: Längsseite
- 32: Breitseite
- 34: Verdickung
- 36: Spitze

## Patentansprüche

1. Melkbecher mit einem Gehäuse (2) und einem in dem Gehäuse (2) aufgenommenen Zitzengummi (8), welches einen Zitzenraum (16) von einem Pulsraum (9) trennt und welches einen Kopfbereich (20), einen Schaftbereich (10) und einen Endbereich (12) aufweist, welcher mit einem Milchkanalanschlussstück (14) kommuniziert,
**dadurch gekennzeichnet,**
**dass** der Schaftbereich (10) zumindest in seinem unteren Längenabschnitt eine längliche Querschnittsform aufweist, wobei an den Breitseiten der länglichen Querschnittsform jeweils wenigstens ein Bereich (34, 36) vorgesehen ist, der rechtwinklig zur Breitenrichtung eine höhere Wandstärke als die sich gegenüberliegenden Längsseiten des Querschnitts hat.

2. Melkbecher nach Anspruch 1,
**dadurch gekennzeichnet,**
**dass** der Schaftbereich (10) einen Bereich (28) geringerer Wandstärke aufweist, der derart angeordnet ist, dass die in dem Melkbecher aufgenommene Zitze mit ihrem vorderen Ende von dem Bereich (28) verringerter Wandstärke umgeben ist.

3. Melkbecher nach einem der vorherigen Ansprüche, **dadurch gekennzeichnet, dass** der Schaftbereich (10) zumindest in seinem sich an den Kopfbereich (20) anschließenden oberen Längenabschnitt eine konstante längliche Querschnittsform aufweist.

4. Melkbecher nach einem der Ansprüche 2 oder 3, **dadurch gekennzeichnet, dass** der untere Längenabschnitt des Schaftbereiches (10) eine längliche Querschnittsform aufweist.

5. Melkbecher nach einem der Ansprüche 2 bis 4, **dadurch gekennzeichnet, dass** der Bereich (28) verringerter Wandstärke sich bis in den unteren Längenabschnitt des Schaftbereiches (10) erstreckt.

6. Melkbecher nach einem der vorherigen Ansprüche, **dadurch gekennzeichnet, dass** das Längenmaß (L) der länglichen Querschnittsform wenigstens 40% größer als das Breitenmaß (T) der Querschnittsform ist.

7. Melkbecher nach einem der vorherigen Ansprüche, **dadurch gekennzeichnet, dass** der untere Längenabschnitt des Schaftbereiches (10) an seinen sich gegenüberliegenden Breitseiten (32) jeweils eine Materialanhäufung des Zitzengummimaterials aufweist.

8. Melkbecher nach Anspruch 7, **dadurch gekennzeichnet, dass** an den Breitseiten die Wandstärke des Zitzengummis (8) erhöht ist.

9. Melkbecher nach einem der Ansprüche 7 oder 8, **dadurch gekennzeichnet, dass** an den Breitseiten (32) mehrere Lagen der Zitzengummiwandung in Breitenrichtung hintereinander angeordnet sind.

10. Melkbecher nach einem der vorherigen Ansprüche, **dadurch gekennzeichnet, dass** das Zitzengummi (8) derart ausgebildet ist, dass Druckänderungen zwischen dem Zitzenraum (16) und dem Pulsraum (9) im Wesentlichen ausschließlich durch Ausbreitung des Zitzengummis (8) in Breitenrichtung (B) des länglichen Querschnittprofils ausgeglichen werden.

11. Melkbecher nach Anspruch 1, **dadurch gekennzeichnet, dass** ein Teilstück (28) des Schaftbereiches (10), welches die Zitzenkuppe einer in dem Zitzenraum aufgenommenen Zitze umgibt, eine gegenüber dem oberen und unteren Längenabschnitt des Schaftbereiches (10) geringere Formsteifigkeit aufweist.

12. Melkbecher nach Anspruch 11, **dadurch gekennzeichnet, dass** die Wandstärke des Teilstücks (28) verringert ist.

13. Melkbecher nach einem der vorherigen Ansprüche, **dadurch gekennzeichnet, dass** das Längenmaß (L) zwischen 24 und 35 mm, vorzugsweise zwischen 28 und 32 mm ist.

## Claims

1. Milking cup having a housing (2) and a teat rubber (8) which is held in the housing (2), separates a teat space (16) from a pulsation space (9) and includes a head region (20), a shank region (10) and an end region (12) which is in communication with a milk passage connection piece (14), **characterized in that** the shank region (10), at least in its lower length section, has an elongate cross-sectional shape, in each case at least one region (34, 36) which, at right angles to the width direction, has a greater wall thickness than the long sides of the cross section located opposite one another being provided at the wide sides of the elongate cross-sectional shape.

2. Milking cup according to Claim 1, **characterized in that** the shank region (10) has a region (28) of lesser wall thickness, which is arranged in such a manner that the front end of the teat held in the milking cup is surrounded by the region (28) of reduced wall thickness.

3. Milking cup according to one of the preceding claims, **characterized in that** the shank region (10) has a constant, elongate cross-sectional shape at least in its upper length section, which adjoins the head region (20).

4. Milking cup according to Claim 2 or 3, **characterized in that** the lower length section of the shank region (10) has an elongate cross-sectional shape.

5. Milking cup according to one of Claims 2 to 4, **characterized in that** the region (28) of reduced wall thickness extends as far as into the lower length section of the shank region (10).

6. Milking cup according to one of the preceding claims, **characterized in that** the length dimension (L) of the elongate cross-sectional shape is at least 40% greater than the width dimension (T) of the cross-sectional shape.

7. Milking cup according to one of the preceding claims, **characterized in that** the lower length section of the shank region (10), at each of its opposite wide sides (32), has an accumulation of the teat rubber material.

8. Milking cup according to Claim 7, **characterized in that** the wall thickness of the teat rubber (8) is increased at the wide sides.

9. Milking cup according to Claim 7 or 8, **characterized in that** a plurality of layers of the teat rubber wall are arranged one behind the other in the width direction at the wide sides (32).

10. Milking cup according to one of the preceding claims, **characterized in that** the teat rubber (8) is designed in such a manner that changes in pressure between the teat space (16) and the pulsation space (9) are compensated for substantially exclusively by the teat rubber (8) widening in the width direction (B) of the elongate cross-sectional profile.

11. Milking cup according to Claim 1, **characterized in that** a partial piece (28) of the shank region (10), which surrounds the teat cup of a teat held in the teat space, has a lower dimensional rigidity than the upper and lower length sections of the shank region (10).

12. Milking cup according to Claim 11, **characterized in that** the wall thickness of the partial piece (28) is reduced.

13. Milking cup according to one of the preceding claims, **characterized in that** the length dimension (L) is between 24 and 35 mm, preferably between 28 and 32 mm.

## Revendications

1. Gobelet trayeur comprenant une enveloppe (2) et un manchon trayeur (8) qui est logé dans celle-ci, qui sépare un espace pour trayon (16) d'un espace de pulsation (9) et qui comporte une zone supérieure (20), une zone formant tige (10) et une zone d'extrémité (12) qui communique avec un raccord de conduit à lait (14),
**caractérisé en ce que** la zone formant tige (10) présente au moins dans sa partie longitudinale inférieure une forme de section transversale oblongue, étant précisé que sur les petits côtés de cette forme oblongue, il est prévu au moins une zone (34, 36) qui présente à angle droit par rapport au sens de la largeur une épaisseur de paroi plus grande que les grands côtés opposés de ladite section transversale.

2. Gobelet trayeur selon la revendication 1, **caractérisé en ce que** la zone formant tige (10) comporte une zone (28) de plus faible épaisseur de paroi qui est disposée de telle sorte que le trayon reçu dans le gobelet trayeur est entouré avec son extrémité avant par ladite zone (28) de plus faible épaisseur de paroi.

3. Gobelet trayeur selon l'une des revendications précédentes, **caractérisé en ce que** la zone de tige (10) présente, au moins dans sa partie longitudinale supérieure qui fait suite à la zone supérieure (20), une forme de section transversale oblongue constante.

4. Gobelet trayeur selon la revendication 2 ou 3, **caractérisé en ce que** la partie longitudinale inférieure de la zone formant tige (10) présente une forme de section transversale oblongue.

5. Gobelet trayeur selon l'une des revendications 2 à 4, **caractérisé en ce que** la zone (28) de plus faible épaisseur de paroi s'étend jusque dans la partie longitudinale inférieure de la zone formant tige (10).

6. Gobelet trayeur selon l'une des revendications précédentes, **caractérisé en ce que** la longueur (L) de la forme de section transversale oblongue est supérieure d'au moins 40 % à la largeur (T) de celle-ci.

7. Gobelet trayeur selon l'une des revendications précédentes, **caractérisé en ce que** la partie longitudinale inférieure de la zone formant tige (10) présente sur chacun de ses petits côtés opposés (32) une accumulation de la matière du manchon trayeur.

8. Gobelet trayeur selon la revendication 7, **caractérisé en ce que** sur les petits côtés, l'épaisseur de paroi du manchon trayeur (8) est plus grande.

9. Gobelet trayeur selon la revendication 7 ou 8, **caractérisé en ce que** sur les petits côtés (32), plusieurs couches de la paroi de manchon trayeur sont disposées les unes derrière les autres dans le sens de la largeur.

10. Gobelet trayeur selon l'une des revendications précédentes, **caractérisé en ce que** le manchon trayeur (8) est conçu de telle sorte que les variations de pression entre l'espace pour trayon (16) et l'espace de pulsation (9) sont compensées quasiment uniquement grâce à l'extension du manchon trayeur (8) dans le sens de la largeur (T) du profil de section transversale oblong.

11. Gobelet trayeur selon la revendication 1, **caractérisé en ce qu'**un tronçon (28) de la zone formant tige (10) qui entoure le bout d'un trayon reçu dans l'espace pour trayon présente une résistance de forme plus faible que les parties longitudinales supérieure et inférieure de la zone formant tige (10).

12. Gobelet trayeur selon la revendication 11, **caractérisé en ce que** l'épaisseur de paroi du tronçon (28) est réduite.

13. Gobelet trayeur selon l'une des revendications précédentes, **caractérisé en ce que** la longueur (L) est située entre 24 et 35 mm, de préférence entre 28 et 32 mm.
